# EUROPÄISCHE PATENTANMELDUNG

(11) **EP 1 125 676 A2**
(43) Veröffentlichungstag der Anmeldung: **22.08.2001**
(21) Anmeldenummer: 01101488.3
(22) Anmeldetag: 24.01.2001
(51) Int. Cl.: B23Q 1/00

(54) **Spanneinrichtung**

(30) Priorität: 16.02.2000 DE 10006847
(71) Anmelder: Vischer & Bolli AG, 8600 Dübendorf 1 (CH)
(72) Erfinder: Etter, Ernst, 8800 Thalwil (CH)
(74) Vertreter: Paul, Dieter-Alfred, Dipl.-Ing.

(57) **Zusammenfassung**

Dargestellt und beschrieben wird eine Spanneinrichtung zur Fixierung eines Einzugsbolzens (12) an einem Maschinentisch, einer Grundplatte o. dgl., mit einem Kolben (6), der in einer Zylinderbohrung (4) unter Bildung eines Druckraums (5) bewegbar angeordnet ist, einem die Zylinderbohrung (4) auf der dem Druckraum (5) gegenüberliegenden Seite verschließenden Deckel (9), einer Aufnahme (11), die in dem Kolben (6) und/oder dem Deckel (9) ausgebildet ist und in die ein Einzugsbolzen (12) eingesetzt werden kann, und einem Spannmechanismus, um einen Einzugsbolzen (12) in der Aufnahme (11) zu fixieren, wobei der Spannmechanismus durch Verstellung des Kolbens (6) zwischen einer Spannstellung, in die er durch Federelemente (10), die in einem zwischen dem Kolben (6) und dem Deckel (9) vorgesehenen Federraum (2) angeordnet sind, gedrückt wird, und einer Freigabestellung, in die er durch Beaufschlagung des Druckraums (5) mit einem Hydraulikmittel gebracht werden kann, betätigbar ist, die dadurch gekennzeichnet ist, daß der Federraum (2) mit der Aufnahme (11) durch wenigstens einen Ablaufkanal (19) verbunden ist, durch den Flüssigkeit, die sich in dem Federraum (2) sammelt, in die Aufnahme (11) ablaufen kann.

## Beschreibung

Die vorliegende Erfindung betrifft eine Spanneinrichtung zur Fixierung eines Einzugsbolzens an einem Maschinentisch, einer Grundplatte o. dgl., mit einem Kolben, der in einer Zylinderbohrung unter Bildung eines Druckraums bewegbar angeordnet ist, einem die Zylinderbohrung auf der dem Druckraum gegenüberliegenden Seite verschließenden Deckel, einer Aufnahme, die in dem Kolben und/oder dem Deckel ausgebildet ist und in die ein Einzugsbolzen eingesetzt werden kann, und einem Spannmechanismus, um einen Einzugsbolzen in der Aufnahme zu fixieren, wobei der Spannmechanismus durch Verstellung des Kolbens zwischen einer Spannstellung, in die er durch Federelemente, die in einem zwischen dem Kolben und dem Deckel vorgesehenen Federraum angeordnet sind, gedrückt wird, und einer Freigabestellung, in die er durch Beaufschlagung des Druckraums mit einem Hydraulikmittel gebracht werden kann, betätigbar ist.

Mechanisch-hydraulisch arbeitende Spanneinrichtungen dieser Art sind beispielsweise aus der DE 298 04 730 U1 bekannt und werden in der Praxis eingesetzt, um Werkstücke am Maschinentisch einer Werkzeugmaschine zu fixieren. Hierzu wird das zu bearbeitende Werkstück in der Regel zunächst auf eine Trägerplatte aufgespannt, und anschließend wird die ganze Einheit bestehend aus Trägerpalette und Werkstück über mehrere Einzugsbolzen, die an der Rückseite der Trägerpalette vorgesehen und als Zentrierelemente ausgebildet sind, an der Werkzeugmaschine festgespannt, indem die Einzugsbolzen in die Aufnahmen der am Maschinentisch vorgesehenen Spanneinrichtungen eingesetzt und darin festgespannt werden.

Bei den bekannten mechanisch-hydraulischen Spanneinrichtungen, von denen die vorliegende Erfindung ausgeht, erfolgt die Betätigung des Spannmechanismus, indem der Kolben zwischen einer Spannstellung und einer Freigabestellung verstellt wird, wobei er in die Spannstellung durch Federelemente, die in einem zwischen dem Kolben und dem Deckel vorgesehenen Federraum angeordnet sind, gedrückt wird und aus dieser durch Beaufschlagung des Druckraums mit einem Hydraulikmittel in die Freigabestellung gebracht werden kann.

Eine Problematik, die in der Praxis immer wieder auftritt, besteht darin, daß aufgrund der häufigen Auf- und Abbewegung des Kolbens in dem Federraum ein Unterdruck entstehen und insbesondere bei auftretendem Dichtungsverschleiß auch Kühlflüssigkeit in den Federraum eindringen kann. Dies kann zu Zwangsverschlüssen führen, indem die eingetretene Flüssigkeit nicht schnell genug aus dem Federraum entweichen kann und somit der Kolben nicht mehr in die obere Freigabestellung gedrückt werden kann.

Aufgabe der Erfindung ist es daher, eine Spanneinrichtung der eingangs genannten Art so auszubilden, daß Fehlfunktionen vermieden werden können.

Diese Aufgabe ist erfindungsgemäß dadurch gelöst, daß der Federraum mit der Aufnahme durch wenigstens einen Flüssigkeitsablaufkanal - nachfolgend auch Ablaufkanal genannt - verbunden ist, der der an seinem einen Ende in den Bodenbereich des Federraums mündet, und durch den die Flüssigkeit, die sich in dem Federraum sammelt, in die Aufnahme ablaufen kann.

Durch die erfindungsgemäß vorgesehenen Flüssigkeitsablaufkanäle zwischen Federraum und der Aufnahme für den Einzugsbolzen wird erreicht, daß sich im Federraum praktisch keine Flüssigkeit sammeln kann, sondern Kühlflüssigkeit, die in den Federraum eintritt, in die Aufnahme abfließt. Außerdem wird auch die Entstehung eines Unterdrucks im Federraum wirksam vermieden, da in umgekehrter Weise über den Flüssigkeitsablaufkanal auch Luft in den Federraum eintreten kann.

An seinem aufnahmeseitigen Ende mündet der Ablaufkanal zweckmäßigerweise in den Bodenbereich der Aufnahme, wobei das federraumseitige Ende höher als das aufnahmeseitige Ende liegen sollte. Durch diese Ausbildung wird erreicht, daß abfließende Kühlflüssigkeit nicht mit Bauteilen, die in der Aufnahme liegen, oder mit dem Einzugsbolzen in Kontakt kommt.

Gemäß einer bevorzugten Ausführungsform ist vorgesehen, daß in den Federraum ein Lufteinblaskanal mündet, durch den Druckluft in den Federraum und von diesem über den Ablaufkanal weiter in die Aufnahme geblasen werden kann. Durch die vorgesehene Ausblasung kann die Aufnahme von Schmutz und Flüssigkeit, die sich darin sammeln, befreit werden, wobei der Kolben bei dieser Konstruktion im Vergleich zu bekannten Lösungen, wie sie beispielsweise aus der DE 197 57 430 C bekannt sind, nur unmerklich geschwächt wird.

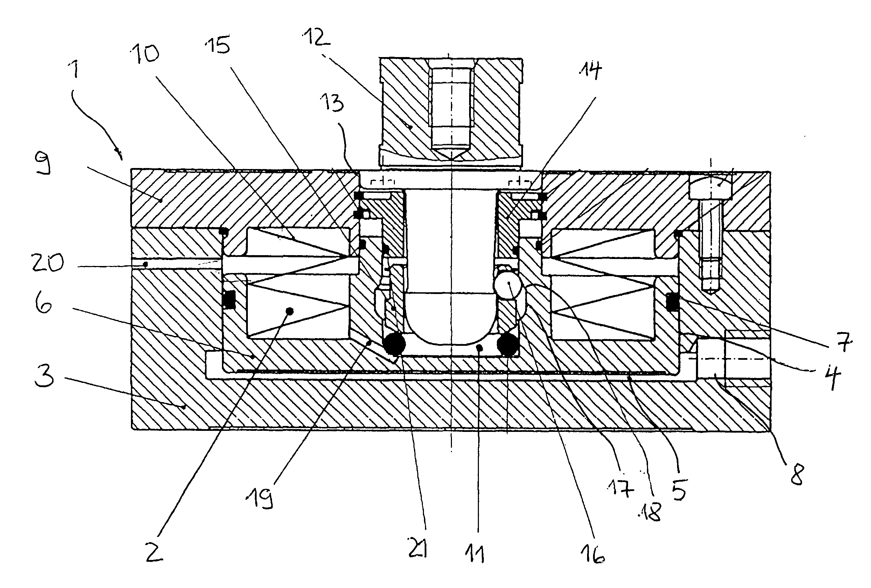

Hinsichtlich weiterer vorteilhafter Ausgestaltungen wird auf die Unteransprüche sowie auf die nachfolgende Beschreibung eines Ausführungsbeispiels unter Bezugnahme auf die beiliegende Zeichnung verwiesen. In der Zeichnung zeigt die einzige Figur eine Ausführungsform einer erfindungsgemäßen Spanneinrichtung mit eingesetztem und festgespanntem Einzugsbolzen im Längsschnitt.

Zu der Spanneinrichtung 1, die an einem Maschinentisch, einer Grundplatte o. dgl. montiert sein kann, gehört ein Zylinder 3, der an seinem oberen Ende offen ist und durch geeignete Spannmittel am Maschinentisch fixiert werden kann. In die Zylinderbohrung 4 des Zylinders 3 ist unter Bildung eines Druckraums 5 ein Kolben 6 axial bewegbar eingesetzt, wobei der Ringspalt zwischen Zylinderbohrung 4 und Kolben 6 durch einen O-Ring 7 abgedichtet ist. In den Boden der Zylinderbohrung 4 mündet ein im Zylinder 3 ausgebildeter Hydraulikmittelkanal 8, durch welchen dem Druckraum 5 über eine im Maschinentisch vorgesehene Zuführleitung ein Hydraulikmittel wie beispielsweise Öl zugeführt werden kann.

Die offene Oberseite des Zylinders 3 ist durch einen Dekkel 9 verschlossen, der am Zylinder 3 festgeschraubt und zentriert gehalten ist, wozu der Deckel 9 zylinderseitig einen zentrieransatz 9a aufweist, der paßgenau zum Durchmesser der Zylinderbohrung 4 dimensioniert ist.

Zwischen dem Deckel 9 und dem Kolben 6 ist ein im wesentlichen geschlossener Federraum 2 vorgesehen, der im wesentlichen von einem Ringraum in der Kolbenoberseite gebildet wird und in dem ein Tellerfederpaket 10 angeordnet ist, das den Kolben 6 in Richtung des Bodens der Zylinderbohrung 4 nach unten beaufschlagt.

In der dem Druckraum 5 gegenüberliegenden Oberseite des Kolbens 6 ist eine Sackbohrung vorgesehen, die eine Aufnahme 11 für einen Einzugsbolzen 12 bildet, welcher in die Aufnahme 11 durch eine im Deckel 9 vorgesehene Durchgangsbohrung 13 eingesetzt ist. Zur Erleichterung und Führung dieses Einsetzvorgangs ist in der Durchgangsbohrung 13 ein hülsenförmiges Führungselement 14 vorgesehen, und zur exakten Positionierung des Einzugsbolzens 5 in der Spanneinrichtung 1 ist der obere Bereich der Durchgangsbohrung 13 in Passung zu einem Flansch 12a des Einzugsbolzens 12 dimensioniert.

Zur Fixierung des Einzugsbolzens 12 in der Aufnahme 11 ist ein Spannmechanismus vorgesehen. Dieser umfaßt in an sich bekannter Weise einen in die Aufnahme 11 eingesetzten Kugelkäfig 15, in dem mehrere Kugeln 16 radial verstellbar gehalten sind. Die Kugeln 16 können in einer oberen Freigabestellung des Kolbens 6 in eine Nut 17 in der Wandung der Aufnahme 11 nach außen ausweichen, so daß ein Einzugsbolzen 12 in den Kugelkäfig 15 eingesetzt und aus diesem herausgenommen werden kann, und sie werden in der unteren Spannstellung des Kolbens 6 durch die Wandung der Aufnahme 11 an einem solchen Ausweichen gehindert.

Die Spannstellung, die in der Zeichnung dargestellt ist, nimmt der Kolben 6 dabei dann ein, wenn der Druckraum 5 drucklos ist und der Kolben 6 durch das Tellerfederpaket 10 nach unten gedrückt wird. In dieser Spannstellung hält eine obere Schrägfläche 18 der Nut 17 die Kugeln 16 in Eingriff mit dem Eingriffsbolzen 12, so daß dieser festgespannt wird. Wenn jetzt der Druckraum 5 über den Hydraulikmittelkanal 8 mit einem Druckmittel beaufschlagt wird, wird der Kolben 6 entgegen der Rückstellkraft des Tellerfederpakets 10 nach oben in seine Freigabestellung gedrückt, in der die Nut 17 den Kugeln 16 Raum läßt, radial nach außen auszuweichen, so daß der Einzugsbolzen 12 aus der Spanneinrichtung 1 herausgenommen bzw. dann auch wieder in diese eingesetzt werden kann. Der Hub des Kolbens 6 ist dabei so gewählt, daß der Einzugsbolzen 12 durch den Boden der Aufnahme 11 nach oben gedrückt wird, um das Entfernen des Einzugsbolzens 12 zu erleichtern.

Durch die regelmäßige Auf- und Abwärtsbewegung des Kolbens kann ein Unterdruck in dem Federraum 2 auftreten, und außerdem kann - insbesondere bei Verschleiß des zwischen Kolben 6 und Deckel 9 vorgesehenen O-Rings 21 - Kühlflüssigkeit in den Federraum 2 eindringen. Um hierdurch bedingte Funktionsstörungen zu vermeiden, ist in dem Kolben 6 ein Ablaufkanal 19 vorgesehen, der den Federraum 2 mit der Aufnahme 11 verbindet. Dieser Ablaufkanal 19 mündet dabei an seinem einen Ende in den Bodenbereich des Federraums 2 und an seinem anderen Ende in den Bodenbereich der Aufnahme 11, wobei das federraumseitige Ende höher als das aufnahmeseitige Ende liegt, so daß Flüssigkeit gut aus dem Federraum 2 abfließen kann.

Außerdem mündet in den Federraum 2 ein Lufteinblaskanal 20, durch den Druckluft in den Federraum 2 und von dort über den Ablaufkanal 19 weiter in die Aufnahme 11 geblasen werden kann, um diese von Schmutzpartikels etc. zu reinigen.

## Patentansprüche

1. Spanneinrichtung zur Fixierung eines Einzugsbolzens (12) an einem Maschinentisch, einer Grundplatte o. dgl., mit einem Kolben (6), der in einer Zylinderbohrung (4) unter Bildung eines Druckraums (5) bewegbar angeordnet ist, einem die Zylinderbohrung (4) auf der dem Druckraum (5) gegenüberliegenden Seite verschließenden Deckel (9), einer Aufnahme (11), die in dem Kolben (6) und/oder dem Deckel (9) ausgebildet ist und in die ein Einzugsbolzen (12) eingesetzt werden kann, und einem Spannmechanismus, um einen Einzugsbolzen (12) in der Aufnahme (11) zu fixieren, wobei der Spannmechanismus durch Verstellung des Kolbens (6) zwischen einer Spannstellung, in die er durch Federelemente (10), die in einem zwischen dem Kolben (6) und dem Deckel (9) vorgesehenen Federraum (2) angeordnet sind, gedrückt wird, und einer Freigabestellung, in die er durch Beaufschlagung des Druckraums (5) mit einem Hydraulikmittel gebracht werden kann, betätigbar ist, **dadurch gekennzeichnet,** daß der Federraum (2) mit der Aufnahme (11) durch wenigstens einen Flüssigkeitsablaufkanal (19) verbunden ist, der federraumseitig in den Bodenbereich des Federraums (2) mündet, und durch den Flüssigkeit, die sich in dem Federraum (2) sammelt, in die Aufnahme (11) ablaufen kann.

2. Spanneinrichtung nach Anspruch 1, **dadurch gekennzeichnet,** daß der Flüssigkeitsablaufkanal (19) aufnahmeseitig in den Bodenbereich der Aufnahme (11) mündet.

3. Spanneinrichtung nach einem der vorherigen Ansprüche, **dadurch gekennzeichnet,** daß das federraumseitige Ende des Flüssigkeitsablaufkanals (19) höher liegt als das aufnahmeseitige Ende.

4. Spanneinrichtung nach einem der vorherigen Ansprüche, **dadurch gekennzeichnet,** daß in den Federraum (2) wenigstens ein Lufteinblaskanal (20) mündet, durch den Druckluft in den Federraum (2) und über den Flüssigkeitsablaufkanal (19) weiter in die Aufnahme (11) geblasen werden kann.

5. Spanneinrichtung nach Anspruch 4, **dadurch gekennzeichnet,** daß die Zylinderbohrung (4) in einem Zylinder (3) ausgebildet und der Lufteinblaskanal (20) in der Zylinderwandung ausgebildet ist.

6. Spanneinrichtung nach einem der vorherigen Ansprüche, **dadurch gekennzeichnet,** daß der Federraum (2) jedenfalls teilweise in dem Kolben (6) ausgebildet ist.

7. Spanneinrichtung nach Anspruch 6, **dadurch gekennzeichnet,** daß der Flüssigkeitsablaufkanal (19) im Kolben (6) ausgebildet ist.
